# FASCICULE DE BREVET EUROPEEN

(11) **EP 1 645 185 B1**
(45) Date de publication et mention de la délivrance du brevet: **22.08.2007**
(21) Numéro de dépôt: 05447203.0
(22) Date de dépôt: 14.09.2005
(51) Int. Cl.: A01K 97/10

(54) **Porte canne à pêche rotatif**
Drehbarer Angelrollenhalter
Rotating fishing rod holder

(30) Priorité: 11.10.2004 BE 200400500
(43) Date de publication de la demande: 12.04.2006
(73) Titulaire: Arnauts, Stefan, 1602 Sint-Pieters-Leeuw (BE)
(72) Inventeur: Arnauts, Stefan, 1602 Sint-Pieters-Leeuw (BE)

(56) Documents cités:
- FR-A- 1 069 038
- GB-A- 2 376 399
- US-A- 2 642 692
- US-A- 4 177 595
- US-A- 4 731 947
- US-A- 5 359 803

## Description

Cette invention trouve son utilité dans la pêche courante et sportive.

Le porte canne à pêche rotatif permet de poser la canne à pêche sur un support de façon que le pêcheur ne doive pas en supporter tout le poids et puisse malgré tout l'utiliser facilement, par exemple en coulée, en cas de vent ou pour faire bouger l'appât.

### Problématique :

Lors de la pêche active avec une canne fixe, le pêcheur, étant assis, tient constamment la canne et la bouge en fonction du courant, du vent, etc. L'intention est de pouvoir ferrer au moindre mouvement déclenché par la plume flottante, de façon que le poisson n'aie pas le temps de lâcher l'appât (avec l'hameçon). Plus rapide est la réaction du pêcheur, plus grande est la possibilité de prise.

Le poids d'une canne à pêche de 9m. ou plus n'est pas à sous-estimer, surtout quand on sait qu'un concours de pêche dure plusieurs heures (en général 2 fois 3 heures ou une fois 5 heures). Ce sont en général les articulations (épaules et coudes) et le dos qui sont continuellement mis à contribution.

Le pêcheur, essentiellement en période de pêche calme (par exemple pendant une heure sans avoir eu une touche), a plutôt tendance à placer sa canne dans le support fixe ; ce qui l'empêche de réagir rapidement avec le risque de perdre un poisson. Parfois le pêcheur tente de pister les poissons chasseurs qui nagent plus loin (1 m maximum) que là où il a amorcé et le fait de ne pas tenir sa canne à pêche de façon habituelle (sur le genou et en dessous du coude) mais de la tenir devant lui à deux mains, rend le travail pénible. Avec une canne à pêche courte, c'est encore possible mais plus avec une longue canne.

Le document US-A-5359803 décrit un type de porte canne à pêche rotatif.

### Solution :

Avec l'emploi du porte canne à pêche rotatif suivant la revendication 1, le pêcheur tient sa canne à pêche sans trop d'effort physique.

Avec la possibilité d'un mouvement de rotation, le support de canne à pêche permet de bouger rapidement et aisément la canne à gauche ou à droite (pêche active) ; ce qui constitue un grand avantage par rapport au support de canne fixe.

### Parties :

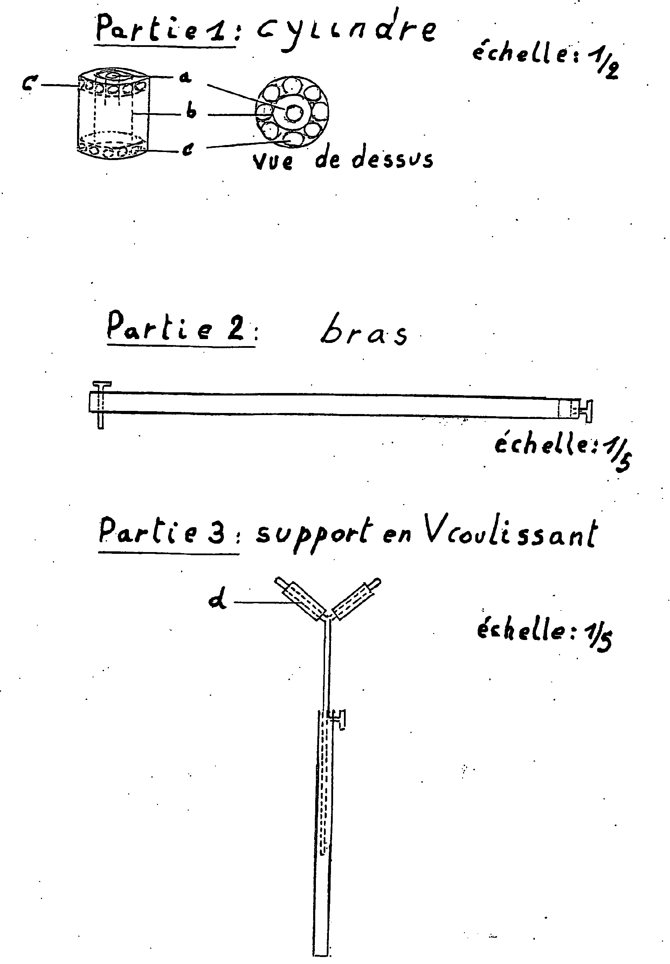

Le porte canne à pêche rotatif, ci-après nommé « Porte canne » se compose de 3 parties :
PARTIE 1 : (Fig. 1) Le cylindre : le matériel doit être très solide et inoxydable ; hauteur +/- 5cm, diamètre +/- 5cm. Dans le cylindre se trouvent 2 roulements à billes (c) entre lesquels tourne un petit cylindre (b).
   Ce cylindre est muni d'un pas de vis afin qu'un boulon (épaisseur d'environ 1cm) puisse y être vissé (a).
PARTIE 2 : (Fig. 2) Le bras (accoudoir) : la barre sera de préférence en aluminium (léger et inoxydable), de section carrée (facilité de montage) de 3 cm avec une longueur de 60 à 70 cm.
   L'extrémité de la barre horizontale sera vissée manuellement dans le cylindre (partie 1 - b). Ainsi le bras pourra pivoter librement autour de l'axe du cylindre.
   Ce bras peut être coulissant afin que la longueur puisse être adaptée.
PARTIE 3 : (Fig. 3) Le support en V coulissant : un tuyau en métal léger (par exemple aluminium), de 1 à 2 cm de diamètre et d'environ 50 cm de long.
   Le tuyau est fixé manuellement à la verticale de l'extrémité du bras. La hauteur de ce support peut être adaptée via un tuyau coulissant.
   Le support consiste en 2 manchons (d) en PVC ou tout autre matériau dur (téflon, ...) sur lesquels la canne à pêche peut bouger en avant et en arrière sans trop de frottement.
   Le frottement peut encore être diminué avec l'emploi de petits roulements à billes. La forme en V doit avoir une ouverture suffisante (plus grand que 80°) pour permettre au pêcheur lors d'une touche de ferrer le poisson vers la gauche ou la droite.
   L'ouverture peut être en forme de U mais de préférence en forme de V.

### Montage et utilisation :

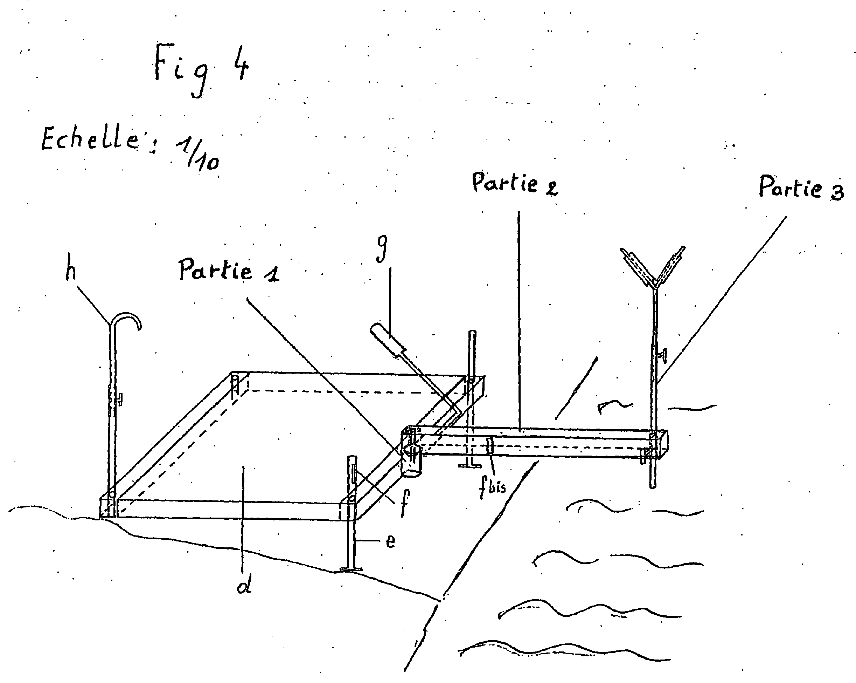

### Cfr. Fig.4

La manière la plus appropriée d'employer le porte canne est de le monter sur une plate-forme (plateau). (Fig. 4-d)
Des plate-formes, bien connues et appréciées dans le monde du sport de pêche, existent déjà dans toutes les dimensions et avec toutes sortes d'accessoires (porte canne à pêche fixe, petite table, etc).

La partie 1 du porte canne (cylindre) peut être vissée avec 2 ou 4 boulons sur la plate-forme, à la hauteur du bras droit pour un droitier ou à la hauteur du bras gauche pour un gaucher. Le cylindre peut ainsi rester sur la plate-forme et ne sera pas gênant lors du transport.

La partie 2 sera chaque fois vissée au cylindre avant le début de la pêche.

La plate-forme doit être montée le plus horizontalement possible, sinon la barre horizontale (partie 2) se tournera du côté le plus incliné. Un petit niveau à bulle est utile pour placer la plate-forme aussi horizontale que possible. On peut aussi monter la plate-forme légèrement penchée, de façon telle que lorsqu'on enlève la canne à pêche de son support, le bras (partie 2) tourne du côté désiré.

Si le pêcheur, après avoir pêché au loin, veut pêcher plus près sans le porte canne, le bras peut être rabattu complètement à droite ou à gauche.

Pour pouvoir 'bloquer' le bras dans cette position, celui-ci peut être pourvu d'un aimant (Fig. 4-f). Un deuxième aimant (réglable en hauteur) (fig. 4-f bis) peut être prévu sur un des pieds de la plate-forme (Fig. 4-e).

L'aimant peut être remplacé par un autre système de fixation, par exemple une bande velcro.

Le support en V (partie 3) est fixé (avec une vis manuelle) verticalement à l'extrémité du bras (partie 2).

Toutes les vis sont pourvues d'un capuchon en PVC afin qu'elles puissent être vissées et dévissées à la main.

La hauteur optimale du support en V doit être réglée selon la position du pêcheur.

Pendant la pêche, la rotation du bras (partie 2), peut s'effectuer soit avec les pieds au niveau du cylindre, soit avec un levier incliné en aluminium (Fig. 4-g) et coulissant de 30 cm à 50 cm de long, fixé sur le bras.

### Avantages :

Avec l'emploi du porte canne à pêche rotatif, le pêcheur pourra tenir la canne avec moins d'effort car, la plus grande partie du poids de la canne (plus longue = 'beaucoup' plus lourde) repose sur le support en V (Partie 3). Au plus la canne est longue, au plus cet avantage est marqué.

Grâce à cela, le pêcheur se sentira physiquement moins fatigué et sa concentration s'en trouvera améliorée.

Ce porte canne est très intéressant pour les pêcheurs qui connaissent des problèmes de dos ou d'articulations aux épaules et/ou aux coudes.

Un autre avantage du porte canne réside dans le fait que le pêcheur peut pêcher plus loin, jusqu'à 1 mètre de plus que la normale et cela en tenant le bout de la canne devant lui et non plus à côté de lui.

Un autre avantage de l'emploi du porte canne mais pas selon l'invention, est que le pêcheur n'est plus obligé de mettre sa canne à pêche dans le support fixe, mais il peut glisser l'extrémité de la canne derrière lui, à la hauteur de son coude, dans un autre support fixe coulissant (Fig. 4-h).

Ainsi il garde les mains libres pour, par exemple, lancer les asticots ou une autre amorce (catapulte) et il peut réagir plus rapidement lors de la touche puisque sa canne à pêche se trouve plus près de lui.

## Revendications

1. Utilisation d'un dispositif de porte canne à pêche rotatif comportant un cylindre (partie 1) agencé pour être monté sur un bâti (d), un bras (partie 2) horizontal placé en rotation à une de ses extrémités autour de l'axe vertical du cylindre et un support (partie 3) vertical en forme de V fixé à l'autre extrémité du bras, ledit support permettant l'appui d'une canne afin de permettre le déplacement aisé et rapide en rotation de ladite canne suite aux mouvements du pêcheur tenant en main l'extrémité de la canne.

2. Utilisation suivant la revendication 1 du dispositif dans lequel le support (partie 3) est pourvu de 2 manchons pouvant être dotés de supports mobiles tels que des roulements.

3. Utilisation suivant la revendication 1 du dispositif dans lequel le support (partie 3) est télescopique.

4. Utilisation suivant la revendication 1 du dispositif dans lequel le bras (partie 2) est télescopique.

5. Utilisation suivant la revendication 1 du dispositif dans lequel le cylindre (partie 1) est pourvu de roulements à billes.

6. Utilisation suivant la revendication 1 du dispositif dans lequel le bras (partie 2) est retenu par un aimant ou autre système, tel qu'une bande velcro (f).

7. Utilisation suivant la revendication 6 du dispositif dans lequel le bras est dirigé avec les pieds autour de l'axe du cylindre.

8. Utilisation suivant la revendication 6 du dispositif dans lequel le bras est dirigé avec le pied reposant sur une petite barre réglable (largeur du soulier) fixée sur ledit bras.

9. Utilisation suivant la revendication 6 du dispositif dans lequel le bras est dirigé avec une main libre via un levier (g) fixé sur ledit bras.

## Claims

1. Use of a rotatable fishing rod carrier device comprising a cylinder (part 1) integral with a frame (d), an horizontal arm (part 2) located rotationally at one of its extremities around the vertical axis of the cylinder and a V-shaped vertical support (part 3) fixed to the other extremity of the arm, said support allowing to seat a rod so as to allow the easy and quick rotational displacement of said rod in response to the movements of the fisher holding the extremity of the rod.

2. Use according to claim 1 of the device in which the support, (part 3) is provided with 2 sleeves that can be provided with mobile supports such as bearings.

3. Use according to claim 1 of the device in which the support (part 3) is telescopic.

4. Use according to claim 1 of the device in which the arm (part 2) is telescopic.

5. Use according to claim 1 of the device in which the cylinder (part 1) is equipped with ball bearings.

6. Use according to claim 1 of the device in which the cylinder (part 1) is retained by a magnet or another system, such as a Velcro band (f).

7. Use according to claim 6 of the device in which the arm is steered with the feet around the axis of the cylinder.

8. Use according to claim 6 of the device in which the arm is steered with the foot placed on a small adjustable bar (shoe width) attached to said arm.

9. Use according to claim 6 of the device in which the arm is steered with a free hand through a handle (g) attached to said arm.

## Patentansprüche

1. Benutzung einer drehbaren Angelrutenträgervorrichtung mit einem mit einem Rahmen (d) zusammenhaltenden Zylinder (Teil 1), einem waagerechten Arm (Teil 2), der an einem seiner Enden um der senkrechten Achse des Zylinders drehbar gelagert ist, und einem senkrechten, V-förmigen Ständer, der an dem anderen Ende des Armes befestigt ist, wo besagter Ständer es ermöglicht, eine Rute zu stützen, um der einfachen und schnellen Drehbewegung besagter Rute durch die Bewegungen des dem Ende der Rute haltenden Fischers zu ermöglichen.

2. Benutzung nach Anspruch 1 der Vorrichtung, in der der Ständer (Teil 3) mit 2 Muffen ausgestattet ist, die mit bewegbaren Halterungen, wie Rolllagern, ausgestattet werden können.

3. Benutzung nach Anspruch 1 der Vorrichtung, in der der Ständer (Teil 3) teleskopisch ist.

4. Benutzung nach Anspruch 1 der Vorrichtung, in der der Arm (Teil 2) teleskopisch ist.

5. Benutzung nach Anspruch 1 der Vorrichtung, in der der Zylinder (Teil 1) mit Kugellagern ausgestattet ist.

6. Benutzung nach Anspruch 1 der Vorrichtung, in der der Arm (Teil 2) durch einen Magnet oder ein anderes System, wie eine Velcra-Band, festgehalten wird.

7. Benutzung nach Anspruch 6 der Vorrichtung, in der der Arm mit den Füßen um der Achse des Zylinders gesteuert wird.

8. Benutzung nach Anspruch 6 der Vorrichtung, in der der Arm mit dem auf einem kleinen regelbaren (Schuhweite), an besagtem Arm befestigten Stab gesteuert wird.

9. Benutzung nach Anspruch 6 der Vorrichtung, in der der Arm mit einer freien Hand über einem an besagtem Arm befestigten Hebel gesteuert wird.
